## Europäisches Patentamt
## European Patent Office
## Office européen des brevets

(19)

(11) Veröffentlichungsnummer: **0 014 453**
**B1**

(12)

# EUROPÄISCHE PATENTSCHRIFT

(45) Veröffentlichungstag der Patentschrift:
25.05.83

(51) Int. Cl.³: **C 02 F 3/08**

(21) Anmeldenummer: **80100541.4**

(22) Anmeldetag: **04.02.80**

(54) **Vorrichtung zur biologischen Abwasserreinigung.**

(30) Priorität: **09.02.79 CH 1309/79**

(43) Veröffentlichungstag der Anmeldung:
**20.08.80 Patentblatt 80/17**

(45) Bekanntmachung des Hinweises auf die Patenterteilung:
**25.05.83 Patentblatt 83/21**

(84) Benannte Vertragsstaaten:
**AT BE CH DE FR GB IT LU NL SE**

(56) Entgegenhaltungen:
**DE-A-1 545 001**
**FR-A-346 679**
**FR-A-2 102 654**
**FR-A-2 234 232**
**FR-A-2 285 347**
**GB-A-1 432 965**
**US-A-3 956 127**

(73) Patentinhaber: **Biotube Marketing Company Limited,
One Dunraven Street, Londen W1Y 3FG (GB)**

(72) Erfinder: **Wieser-Linhart, Johannes, Dossenweg 49,
A-5020 Salzburg (AT)**

(74) Vertreter: **Blum, Rudolf E., c/o E. Blum & Co
Patentanwälte Vorderberg 11, CH-8044 Zürich (CH)**

Vorrichtung zur biologischen Abwasserreinigung

Vorrichtung zur biologischen Abwasserreinigung, mit einem drehbaren trommelförmigen Tauchtropfkörper, der eine Vielzahl Kanäle aufweist, die von zum Tragen des biologischen Rasens bestimmten Wänden umschrieben sind, welcher Tauchtropfkörper aus langgestreckten, vorgefertigten, bündelweise zusammengefaßten, die Kanalwände bildenden Einzelelementen zusammengesetzt ist, die derart angeordnet sind, daß die Längsmittellinie jedes Kanals in einer zur Drehachse des Tauchtropfkörpers parallelen Tangentialebene verläuft.

Zum Reinigen von Abwassern mit aerob abbaubaren Verunreinigungen industriellen oder kommunalen Ursprungs werden gegenwärtig Tauchtropfkörper aufweisende Vorrichtungen verwendet.

Als Tauchtropfkörper bezeichnet man einen zylinderförmigen, auf einer horizontalen Welle angeordneten, eine Vielzahl Kanäle aufweisenden Drehkörper, der auf einem das zu reinigende Abwasser enthaltenden Becken angeordnet ist und etwa zur Hälfte seines Durchmessers in das zu reinigende Abwasser eintaucht und dabei gedreht wird.

An den benetzten Oberflächenabschnitten des Tauchtropfkörpers wächst ein bakterieller Rasen mit einer Dicke von etwa 2 mm fest, der wechselweise bei jeder Umdrehung aus der Luft Sauerstoff aufnimmt und danach im Abwasser enthaltene Verunreinigungen abbaut.

Da nun im Gegensatz zu bekannten Belebtschlamm- und Tropfkörperverfahren weder das Abwasser noch die Luft, sondern der biologische Rasen bewegt wird, ist mit rotierenden Tauchtropfkörpern eine wesentliche Verminderung des Energiebedarfs für den Abbau der Verunreinigungen möglich.

Dabei drehen die Tauchtropfkörper mit Drehgeschwindigkeiten von 5–2 Upm, wobei übliche Durchmesser der trommel- bzw. zylinderförmigen Tauchtropfkörper 2–4 m betragen.

Der Antrieb des Tauchtropfkörpers kann sowohl über seine Tragwelle oder über seinen Umfang mechanisch, hydraulisch oder pneumatisch erfolgen.

Es sind Vorrichtungen zur biologischen Abwasserreinigung gemäß dem Oberbegriff des Patentanspruchs 1 bekannt (FR-A-2 234 232).

Bei den durch Umfangsbänder zusammengehaltenen Rohrbündeln besteht die Gefahr, daß aufgrund der unregelmäßigen Aufpreßkraftverteilung einzelne innere Rohre aus dem Bündel herausgleiten. Diese Gefahr erhöht sich nach längerer Betriebsdauer, weil der auf dem Außenumfang der Rohre aufgebaute schleimige Überzug die gegenseitige Haftkraft derselben herabsetzt. Zudem wird der zwischen jeweils drei aneinanderliegenden Rohren von dessen Umfangsabschnitten umschriebene Zwischenraum in Form eines dreieckförmigen Kanals mit eingebauchten Seitenflächen durch den biologischen Rasen verschlossen, so daß kein Wasser durch diese Kanäle durchströmen kann und der Wirkungsgrad des Tauchtropfkörpers beträchtlich herabgesetzt wird.

Hier will die Erfindung Abhilfe schaffen. Die Erfindung, wie sie in den Ansprüchen gekennzeichnet ist, löst die Aufgabe, eine Vorrichtung zur biologischen Abwasserreinigung zu schaffen, indem die zur Bildung der Einzelelemente verwendeten Kunststoffrohre bei beiden Enden einen muffenförmigen Abschnitt mit unregelmäßigem Verlauf aufweisen, wobei benachbarte Kunststoffrohre lediglich über die jeweiligen muffenförmigen Abschnitte aufeinander abgestützt sind.

Die durch die Erfindung erreichten Vorteile sind im wesentlichen darin zu sehen, daß die Kunststoffrohre formschlüssig ineinander eingreifen und gegen eine axiale Relativbewegung gesichert sind, und daß die jeweiligen Rohre in einem solchen Abstand gehalten werden, daß der durch ihre Umfänge beschriebene Kanal nicht verstopft werden kann.

Nachfolgend wird der Erfindungsgegenstand anhand der Zeichnungen beispielsweise näher erläutert. Es zeigt

Fig. 1 einen Querschnitt durch einen in einem Becken eingesetzten Tauchtropfkörper,

Fig. 2 eine Ansicht des Tauchtropfkörpers der Fig. 1 mit schematisierten Einzelelementen, die der beanspruchten Ausbildung nicht entsprechen,

Fig. 3 einen Querschnitt durch eine weitere Ausführungsform des Tauchtropfkörpers der Fig. 1,

Fig. 4 eine Ansicht des in Fig. 3 gezeigten Tauchtropfkörpers,

Fig. 5 einen Schnitt durch einen wassergetriebenen Tauchtropfkörper,

Fig. 6 eine Ansicht des in der Fig. 5 gezeigten Tauchtropfkörpers einschließlich der Steuerung der Wasserzufuhr,

Fig. 7 eine Ansicht eines Ausführungsbeispiels von Einzelelementen.

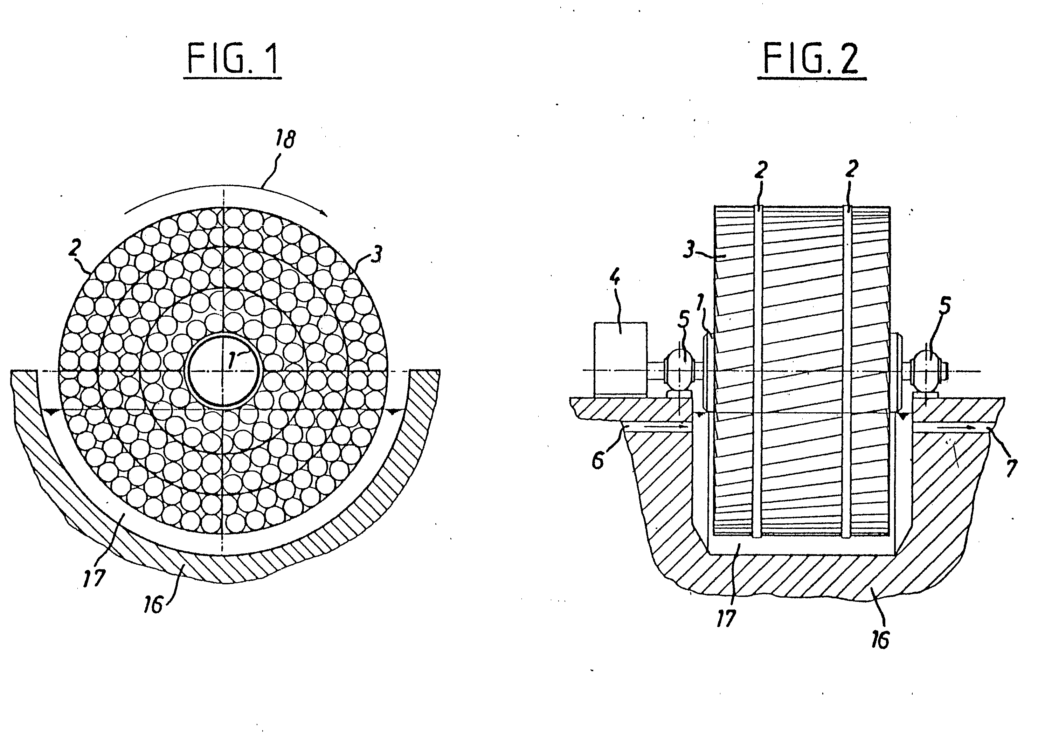

In den Fig. 1 und 2 ist ein erstes Ausführungsbeispiel eines Tauchtropfkörpers dargestellt. Dieser weist eine Tragwelle 1 auf, die im vorliegenden Ausführungsbeispiel eine Hohlwelle ist, welche Tragwelle 1 in Lagern 5 getragen ist. Die Welle ist von einem Motor 4 angetrieben, derart, daß der Tauchtropfkörper in der mit dem Pfeil 18 bezeichneten Drehrichtung dreht. Der Tauchtropfkörper ist in einem Tauchbecken 16 eingesetzt, in welchem das zu reinigende Abwasser 17 angeordnet ist, wobei der Tauchtropfkörper zum Teil in dieses Abwasser 17 eingetaucht ist. Der Wasserzulauf ist mit 6 bezeichnet und der Wasserablauf ist mit 7 bezeichnet. Der Tauchtropfkörper selbst weist ein aus Einzelrohren 3 zusammengebautes, zylinderförmiges Rohrbündel auf. Die Einzelrohre 3 sind dabei in einer Haltebandanordnung 2 gehalten, wobei die Bänder bei diesem Ausführungsbeispiel vier 90°-Kreissektoren beschreiben, die jeweils miteinander verschraubt sind und weiter auch mit der Tragwelle 1 kraftschlüssig verbunden sind. Die Rohre 3 werden vor Ort in die Haltebandanordnungen 2 eingesetzt und darauf werden die zwei parallel zueinander verlaufenden Haltebandanordnungen 2 relativ zueinander um die Drehachse 22 des Tauchtropfkörpers verdreht, derart, daß die Rohre 3, die die Einzelelemente bilden, in bezug auf die Drehachse 22 geneigt verlaufen. Das heißt, die Längsmittellinien der Rohre 3 verlaufen in einer parallel zur Drehachse 22 verlaufenden Tangentialebene, schließen jedoch mit in dieser Ebene liegenden, zur Drehachse 22 parallelen Linien jeweils einen Winkel ein. Es ist offensichtlich, daß die von der Drehachse 22 weiter weg gelegenen Rohre 3 durch die erwähnte Verdrehung eine größere Neigung als die näher bei der Drehachse 22 gelegenen Rohre aufweisen. In anderen Worten ist der erwähnte Winkel zwischen der jeweiligen Längsmittellinie des Rohres und der Parallelen zur Drehachse 22 bei den näher der Drehachse gelegenen Rohren 3 kleiner als der entsprechende Winkel der von der Drehachse 22 weiter weg gelegenen Rohre.

Obwohl in der Fig. 2 der Zulauf 6 und der Ablauf 7 in axialer Richtung zum trommelförmigen Tauchtropfkörper verlaufend gezeichnet sind, können diese auch senkrecht dazu verlaufen.

Die in den Fig. 1 und 2 gezeigte Ausführung ist von einem Motor angetrieben, welcher mit der Tragwelle 1 verbunden ist.

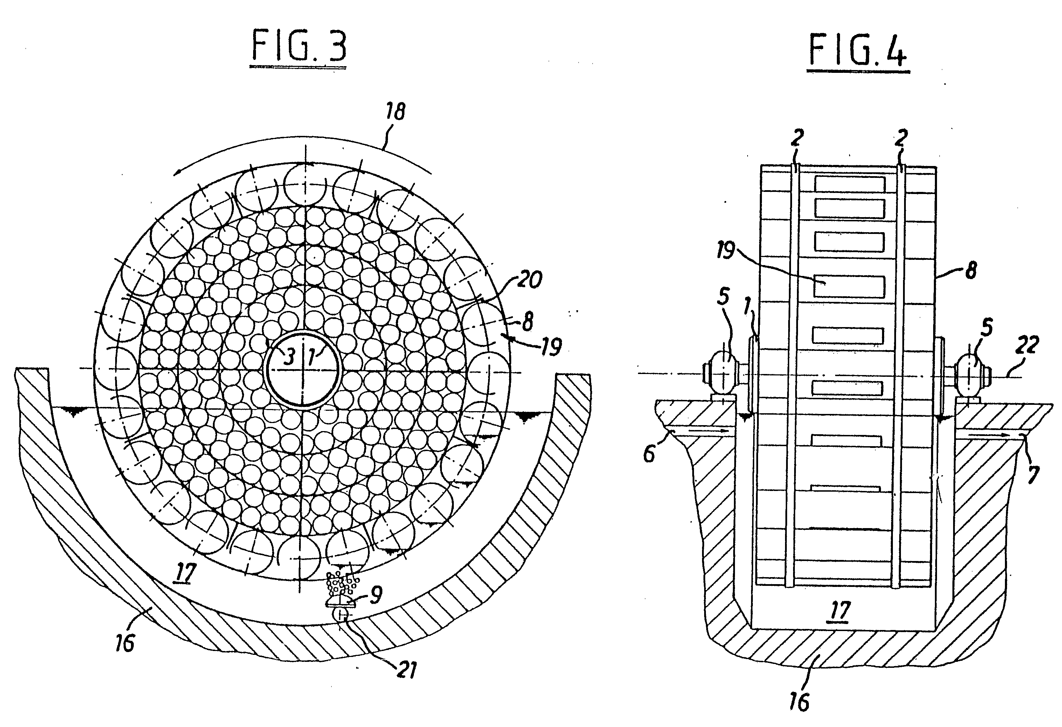

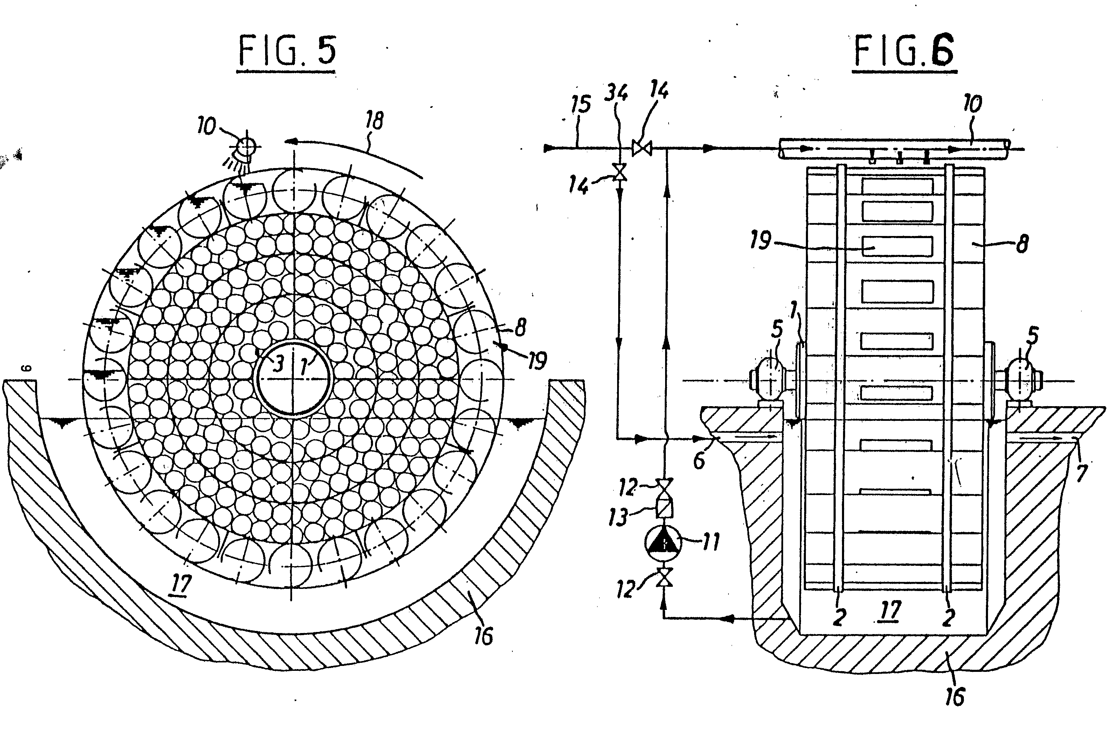

Eine weitere alternative Ausführung, die keinen Antriebsmotor benötigt, ist in den Fig. 3 und 4 gezeigt. Bei dieser Ausführung sind entlang des Umfanges des Tauchtropfkörpers Kammern 8 angeordnet, welche an ihren jeweiligen Stirnseiten verschlossene Rohre sind, in denen zur Bildung von Kammern jeweils eine Öffnung 19 ausgebildet ist. Zur besseren Führung der rohrförmigen Kammern 8 sind Abstandhalter 20 vorgesehen. Dazu ist zu bemerken, daß die Rohre 3 mit dem biologischen Rasen wieder die zur Drehachse 22 geneigte Richtung annehmen, jedoch die Kammern 8 bildenden Rohre parallel zur Drehachse verlaufen und durch ein äußerstes Band der Haltebandanordnung 2 gehalten sind. Insbesondere ist zu bemerken, daß diese Kammern 8 entlang des gesamten Umfangs des Tauchtropfkörpers angeordnet sind. Auf dem Boden des Tauchbeckens 16 sind einzelne Dombelüfter 9 angeordnet, wovon einer in der Fig. 3 gezeigt ist, die mit einer Zufuhrleitung 21 für ein Sauerstoff enthaltendes Gas verbunden sind. Dabei sind die Dombelüfter 9 derart angeordnet, daß das aus diesen ausströmende Gas in die Öffnungen 19 der rohrförmigen Kammern 8 eintritt, so daß der durch dieses Gas erzeugte Auftrieb ein in Richtung des Pfeiles 18 erfolgendes Drehen des Tauchtropfkörpers bewirkt. Somit ist kein zusätzlicher Energieverbrauch eines Antriebsmotors notwendig. In den Fig. 5 und 6 ist eine weitere Ausführung gezeigt, wobei der Tauchtropfkörper durch Wasser angetrieben wird, welches offensichtlich das zu reinigende oder bereits teilweise gereinigte Abwasser sein kann. Die Abwasserzufuhr erfolgt durch eine Druckleitung 15 (Fig. 6). Diese mündet bei einer Verteilstelle 34 in zwei Absperrschieber 14. Diese Absperrschieber 14 ermöglichen, daß je nach der gewünschten Drehgeschwindigkeit des Tauchtropfkörpers das durch die Leitung 15 zugeführte Abwasser teilweise durch den Zulauf 6 hindurch direkt in den Behälter 16 und teilweise durch ein Wasserverteilungsrohr 10 auf den Tauchtropfkörper zu dessen Antrieb strömen kann. Auch hier sind entlang des äußersten Umfangs eine Anzahl Öffnungen 19 aufweisende röhrenförmige Kammern 8 angeordnet, die von dem aus dem Wasserverteilungsrohr 10 ausströmenden Wasser gefüllt werden und damit der Antrieb des Tauchtropfkörpers sichergestellt ist.

Aus der Fig. 6 ist ersichtlich, daß eine Hilfspumpe 11 mit einer Rückschlagkappe 13 sowie Schiebern 12 vorhanden ist. Diese dient dazu, Wasser aus dem Becken 16 dem Wasserverteilungsrohr 10 im Umlauf zuzuführen, falls die durch die Druckleitung 15 zuströmende Wassermenge zum Betrieb des Tauchtropfkörpers nicht ausreicht. Diese Ausbildungsform, die entsprechend einem oberschlächtigen Wasserrad arbeitet, ist insbesondere vorteilhaft, weil bekanntlicherweise Flüssigkeitspumpen bei entsprechender hydraulischer Druckbildung immer einen höheren Wirkungsgrad als Gebläse aufweisen; somit ist eine noch weitere Verringerung des spezifischen Energiebedarfs möglich.

Die in den Fig. 1 bis 6 gezeigten Einzelelemente 3 sind, wie dies vorher bereits erwähnt worden ist, Kunststoffrohre. Es ist nun offensichtlich, daß die Kunststoffrohre vorgefertigt werden können und dann erst bei der Abwässerungsanlage selbst mit Hilfe der Haltebandanordnung 2 zu vollständigen Tauchtropfkörpern zusammengefaßt werden können. Somit sind dem Durchmesser des endgültigen Tauchtropfkörpers keine aus Transportgründen hervorgehende Grenzen gesetzt.

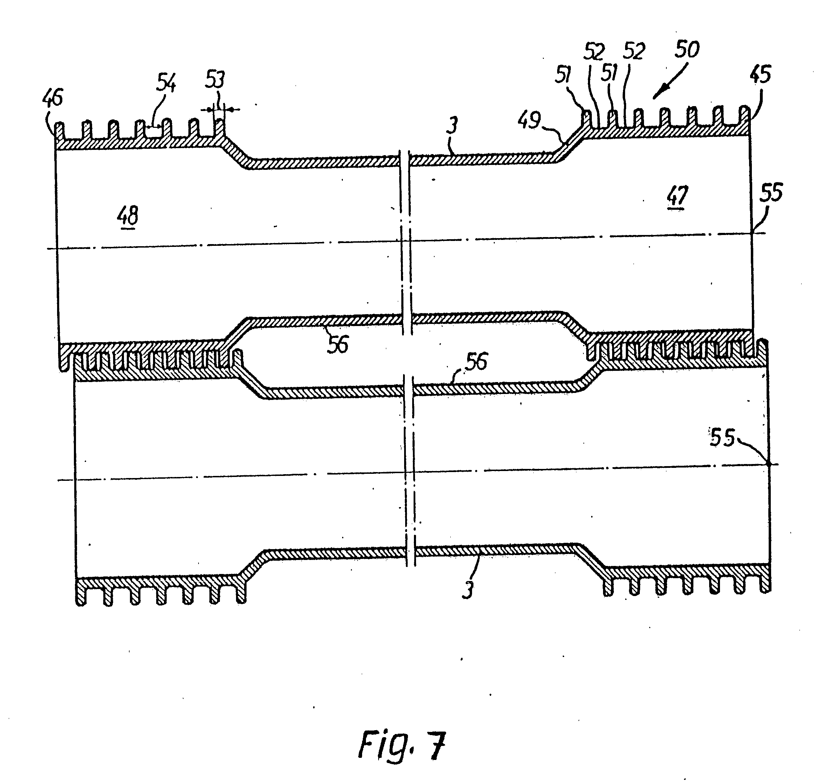

In der Fig. 7 ist im einzelnen ein Ausführungsbeispiel von Einzelelementen dargestellt. Sind die Rohre 3 nämlich glattwandig, zu Bündeln zusammengefaßt und durch die Bündel umringende Haltebänder gegen die Tragwelle 1 hin gespannt, besteht die Gefahr, daß einzelne der glattwandigen Rohre 3 aufgrund eines ungünstigen Kraftflusses nicht oder nur schwach gegen benachbarte Rohre 3 oder auch gegen die Tragwelle 1 gedrückt werden. Solche einzelne Rohre 3 können sich axial verschieben und im äußersten Fall aus dem Bündel herausfallen.

Um diese Gefahr auszuschließen, weisen die Rohre 3 gemäß Fig. 7 bei beiden Enden manschettenförmige Erweiterungen 45, 46 auf. Dabei kann der endständige Innenraumabschnitt 47, 48 des Rohres 3 an den Enden erweitert sein oder es kann unter Beibehaltung des Rohrinnendurchmessers lediglich die Rohrwand 49 bei den Enden verdickt sein (nicht gezeigt).

In jedem Fall ist der Außenmantel 50 des Rohrendes aus einer Folge Umfangsrippen 51 gebildet, die jeweils durch eine Umfangsnut 52 voneinander getrennt sind. Werden nun Rohre 3 aufeinandergeschichtet, dringen jeweils die Umfangsrippen 51 des einen Rohres 3 in die Umfangsnuten 52 seines benachbarten Rohres 3 ein. Somit ist sichergestellt, daß eine axiale Arretierung aller Rohre 3 vorhanden ist.

Die Dicke 53 der Rippen 51 ist kleiner als die Breite 54 der Nuten 52. Somit können benachbarte Rohre 3 schiefwinklig zueinander verlaufen und es kann dennoch der gegenseitige Eingriff aufrechterhalten sein. Diese Relativstellung benachbarter Rohre 3 tritt offensichtlich auf, weil die innen gelegenen Rohre 3 im Vergleich mit weiter außen gelegenen Rohren 3 weniger schief zur Längsachse des Tauchtropfkörpers verlaufen. Bei einer Ausführung ist die Breite 54 der Nuten 52 etwa doppelt so groß wie die Breite der Rippen 51. Damit ist ein vollständiger gegenseitiger Eingriff von drei einander gegenseitig berührenden Rohren 3 sichergestellt, d. h., von Rohren 3, deren Querschnittsmittelpunkte 55 die Scheitel eines gleichseitigen Dreiecks beschreiben.

Ein weiterer Vorteil dieser Ausführung ist, daß die Außenwände 56 benachbarter Rohre 3 voneinander einen beträchtlichen Abstand aufweisen. Somit steht (vergleiche Fig. 1) eine größere Oberfläche zur Aufnahme des biologischen Rasens zur Verfügung und es ist nicht möglich, daß der Raum zwischen benachbarten Rohren 3 derart vom biologischen Rasen ausgefüllt wird, daß kein zu reinigendes Wasser diesen Raum durchströmen kann.

**Patentansprüche**

1. Vorrichtung zur biologischen Abwasserreinigung, mit einem drehbaren trommelförmigen Tauchtropfkörper, der eine Vielzahl Kanäle aufweist, die von zum Tragen des biologischen Rasens bestimmten Wänden umschrieben sind, welcher Tauchtropfkörper aus langgestreckten, vorgefertigten, bündelweise zusammengefaßten, die Kanalwände bildenden Einzelelementen zusammengesetzt ist, die derart angeordnet sind, daß die Längsmittellinie jedes Kanals in einer zur Drehachse des Tauchtropfkörpers parallelen Tangentialebene verläuft, dadurch gekennzeichnet, daß jedes Einzelelement ein Kunststoffrohr ist, das bei beiden Enden einen muffenförmig erweiterten Abschnitt mit zur gegenseitigen Arretierung gegen axiales Verschieben unregelmäßigem Verlauf des Außenmantels aufweist.

2. Vorrichtung nach Anspruch 1, dadurch gekennzeichnet, daß der Außenmantel eine Folge Umfangsrippen aufweist, die jeweils durch eine Umfangsnut voneinander getrennt sind, und daß das jeweilige Breitenmaß der Rippen, in axialer Richtung des Rohres gesehen, kleiner als das jeweilige Breitenmaß der Nuten ist.

**Claims**

1. Device for biological cleaning of sewer water, with a rotatable drum shaped immersion trickling body which comprises a plurality of channels circumscribed by walls intended for supporting the biological grass, which immersion trickling body is composed of elongated, prefabricated, bundlewise collected individual elements forming the channel walls, which are arranged such that the longitudinal center line of every channel extends in a tangential plane extending parallel of the axis of rotation of the immersion trickling body, characterized in that every individual element is a plastic tube which comprises at both ends a sleevelike enlarged section having an irregular extent of the outer jacket allowing a mutual locking against an axial shifting.

2. Device according to claim 1, characterized in that the outer jacket comprises a series of circumferential ribs which are separated each by a circumferential groove, and that the respective width of the ribs seen in axial direction of the tube is smaller than the respective width of the grooves.

**Revendications**

1. Appareil pour le traitement biologique des eaux usagées, avec un tambour rotatif plongeant à égouttement qui présente de multiples canaux délimités par des cloisons destinées à porter un mousse biologique, le tambour étant composé d'éléments allongés préfabriqués, assemblés en faisceaux et délimitant les canaux, ces éléments étant agencés de manière à ce que la ligne médiane de chaque canal soit placée dans un plan tangentiel parallèle à l'axe de rotation du tambour, caractérisé en ce que chaque élément est un tube en plastique qui présente à ses deux extrémités une partie renflée en forme de manchon, avec une surface extérieure de forme irrégulière, pour empêcher un déplacement réciproque en direction axiale.

2. Appareil selon la revendication 1, caractérisé en ce que la surface extérieure présente une série d'ailettes périphériques mutuellement séparées par des rainures périphériques, l'épaisseur des ailettes, mesurée en direction axiale, étant inférieure à la largeur des rainures.

FIG.2

FIG.1

# FIG.3

# FIG.4

0 014 453

FIG. 5

FIG. 6

0 014 453

Fig. 7